# NEW EUROPEAN PATENT SPECIFICATION

(11) **EP 2 184 725 B3**
(45) Date of publication of this specification: **04.11.2026**
(45) Mention of the grant of the patent: 23.10.2013
(21) Application number: 09175717.9
(22) Date of filing: 11.11.2009
(51) Int. Cl.: G08G 1/0965

(54) **Emergency service warning system**
Notfalldienst-Warnsystem
Système d'avertissement d'un service d'urgence

(30) Priority: 11.11.2008 NL 2002201
(43) Date of publication of application: 12.05.2010
(73) Proprietor: Phyco Trading B.V., 3861 NH Nijkerk (NL)
(72) Inventor: Rijks, Johan, 3763 LS, Soest (NL)
(74) Representative: V.O.

(56) References cited:
- EP-A2- 0 942 402
- DE-A1- 10 053 099
- US-A- 4 241 326
- US-A- 6 160 493
- US-A1- 2003 141 990
- US-A1- 2007 159 354
- US-B1- 6 958 707

## Description

The invention relates to an emergency service warning system, arranged to warn a user of approach of emergency services, provided with:
- at least one movable emergency service transmitter; and
- at least one receiver, arranged to receive signals transmitted by the emergency service transmitter.

Such a system is known from US 4,238,778. The known system can make known the presence of an approaching emergency service vehicle (e.g., an ambulance), to adjust speed depending on the warning signals of the emergency service vehicle being heard and seen.

In the known system, the emergency service vehicle is provided with a separate transmitter, which transmits a radio-frequency warning signal. The warning signal has a predetermined frequency, for instance, in the VHF or UHF range. Another motor vehicle is provided with a receiver, arranged to receive the radio-frequency warning signal transmitted by the emergency service vehicle. The receiver tuned to the predetermined frequency delivers an acoustic signal to warn a driver of the motor vehicle, upon reception of the warning signal.

According to US '778, preferably a communication possibility is provided which allows a driver of the emergency service vehicle to give commands to the driver of a motor vehicle to be warned, via the transmitter. An advantage is that the driver of a motor vehicle can be timely alerted to the approach of an emergency service vehicle and can take appropriate measures, for instance, by timely moving to the side.

US6958707 discloses a dedicated warning system, according to the preamble of independent claims 1, 10 and 15, requiring active involvement of the emergency services themselves to warn other road users. Particularly, the publication discloses a dedicated apparatus for alerting occupants in a commuter vehicle to the presence of a plurality of emergency vehicles in the vicinity, comprising a receiver operable to receive signals transmitted by at least one of the emergency vehicles.

US2007/159354 discloses an intelligent emergency vehicle alert system that actively informs a driver of a ground vehicle about the presence of a responding emergency vehicle ("REV") in the local vicinity and indicates whether evasive action is required by the driver to allow the REV to pass and/or to avoid a collision with the REV.

US4241326 discloses a warning system, including dedicated signalling means responsive to a pulse message of a predetermined first type for providing at least a first form of signal to an operator of a civilian vehicle receiving a modulated carrier signal (emitted in a police communications frequency band), transducer means within the receiving vehicle for reproducing voice messages, and switching means responsive to a pulse message of a predetermined type for causing a voice message of the demodulated message signals to be supplied to said transducer means.

A disadvantage of the known systems is that they are relatively complex.

The object of the present invention is to solve the above-mentioned problems. In particular, the invention contemplates an emergency service warning system capable of efficiently warning a user of one or more approaching emergency services.

To this end, the system according to the invention is characterized by the features of claim 1.

Emergency services are typically already provided with communication means, for instance, a specific emergency services communication network. Often, such a communication network is well protected from listening in ('monitoring'). Unauthorized persons therefore cannot make use of such an emergency services communication network.

Such a network comprises, for instance, stationary communication units (e.g., radio masts) spread over a relatively large area, and mobile communication equipment (e.g., walkie-talkies, radiophones and the like), which communication equipment can transmit the emergency service signals to the stationary units.

An idea of the present invention comprises the advantageous use of such emergency service communication means, in themselves already in circulation (which normally cannot be monitored by ordinary road users), as part of an emergency service warning system.

In particular, to this end, at least one user receiver is arranged to detect the (in themselves already available) emergency service signals and to deliver a warning signal upon detection of an emergency service signal (coming from a mobile transmitter of an approaching emergency service).

In particular, the system according to the invention is arranged to make no use of specific warning transmitters (to be taken along by emergency services) to transmit specific warning signals to user receivers. In this way, emergency services hence do not need to be provided with separate warning transmitters. Thus, a relatively simple, relatively inexpensive, well implementable and particularly efficient warning system can be obtained. Moreover, the emergency services can then use the emergency service signals in unmodified form for their own use, for instance, for internally (i.e., between the emergency services mutually) passing on position information, speech and/or other communication information. Preferably, this internal emergency service communication (i.e., at least comprising the signals transmitted by an emergency service mentioned) is encrypted in a known manner, so that the content of the emergency service communication cannot be monitored by others (i.e., for instance, ordinary road users, which are not provided with specific emergency service transmitters).

Thus, in particular, a user receiver of the present system is not arranged to decode signals transmitted by an emergency service transmitter, for instance, encoded digital signals. In particular, moreover, the user receiver is not provided with or associated with its own emergency service transmitter. A user of the user receiver is hence unable to transmit emergency service signals.

The receiver is arranged to merely detect (the presence of) emergency service signals, and to deliver a warning signal upon a detection of such a signal, without deciphering a possible content of the emergency service signals.

Further, the user receiver is preferably arranged to determine the strength (in particular field strength) of a received emergency service signal, for instance, to be able to assess how far a respective emergency service is removed from the receiver. The receiver may, for instance, deliver a warning signal which depends on a measured strength of a received emergency service signal, which warning signal preferably depends further on a direction of reception of the received signal.

The invention furthermore provides a method that is characterized by the features of claim 10.

In this way, the above-mentioned advantages can be achieved. According to a further elaboration, the method comprises associating a detected emergency service location with position information, for instance, position information provided by a GPS system, and preferably storing the position information, more preferably in a database. To this end, the system may, for instance, be provided with or integrated with the traffic control alert system for road users which is known per se from Dutch patent NL1026352.

The invention moreover provides a user receiver of a system according to the invention. The receiver is then preferably arranged for use in a method according to the invention, and can provide the above-mentioned advantages, in particular in combination with one or more emergency service transmitters mentioned and one or more stationary emergency service communication devices mentioned.

Further advantageous elaborations of the invention are described in the subclaims. Presently, the invention will be clarified with reference to a non-limitative exemplary embodiment and the drawing. In the drawing:
Fig. 1 shows schematically an exemplary embodiment of the invention; and
Fig. 2 shows a schematic example of a user receiver according to an exemplary embodiment of the invention.

Like or corresponding features in this application are designated by like or corresponding reference characters.

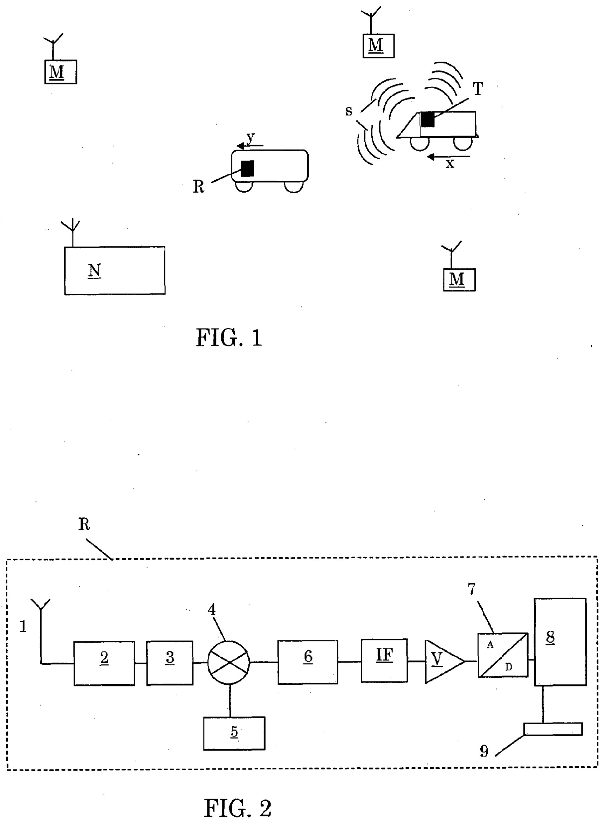

Fig. 1 shows an example of a system which is provided with movable emergency service transmitters T, and receivers M, R, arranged to receive signals transmitted by the emergency service transmitters T.

In particular, the system comprises multiple emergency service transmitters T (of which only one is shown) and multiple emergency service communication devices M, which are part of a national or regional emergency service communication network. The transmitters T are in particular mobile transmitters, which can, for instance, be carried along by emergency services (e.g., vehicles and/or staff, e.g., of ambulance services, police, fire brigade, and the like). An emergency service transmitter T may, for instance, comprise a walkie-talkie, and/or be part of an emergency service vehicle. Arrow x in Fig. 1 designates movement of an emergency service vehicle which comprises such a transmitter T.

The system is provided, in particular, with stationary emergency service transmitter/receiver devices M for the purpose of communication with the mobile emergency service transmitters T, utilizing emergency service signals (i.e., radio signals associated with the emergency service) S. The emergency service signals S comprise encoded digital signals S, a decoded message, speech or other information to be communicated, during communication via the transmitter T. As will be elucidated hereinbelow, the communication signals S comprise in any case periodic signals, which are transmitted when the transmitter T is in an active mode to report the presence of the transmitter T to the network.

The stationary emergency service communication devices M comprise in particular stationary network stations, e.g., radio masts. The network stations M are, for instance, set up such that a relatively large coverage area, preferably national or regional, is obtained, in order for the emergency services to maintain communicative contact with the network as reliably as possible (via the network stations M, utilizing the transmitters T).

The emergency service communication network T, M may, for instance, comprise a stable and reliable digital communication network arranged, for instance, to transmit speech and data in digitally encoded form from mobile units (which are provided with the transmitters T) via the stations M to one or more central radio rooms N and/or transmitters of other mobile users (not represented). Preferably, the emergency service communication network T, M is based on the Tetra standard, known per se. The network T, M may, for instance, be the C2000 system being in use in the Netherlands, or a similar system.

An aspect of the invention provides an advantageous use of the digital communication network T, M. In particular, the invention provides an emergency service warning system, arranged to warn a user of approach of emergency services, while the signals S transmitted by the mobile transmitters T can provide extra functionality.

As shown in Fig. 1, to that end, the system is provided with at least one user receiver R which is arranged to detect emergency service signals S and to deliver a warning signal upon detection of an emergency service signal, in order to warn a respective user that an emergency service is in the vicinity. On the basis of the warning signals, the receiver R can preferably indicate a global distance to, and direction of the transmitter T that has transmitted the signals. The user receiver R is, for instance, associated with a respective user, for instance, a road user, who in particular is not part of the emergency service. The present system is so designed that this user cannot use the user receiver R to make content of communication sent via the communication network T, M available.

The user receiver R may be implemented in different manners. A non-limiting example of the receiver is represented in Fig. 2, and is elucidated below.

The receiver R may, for instance, be designed to be portable by a user. The receiver R may be arranged to be coupled to, for instance, built into, a user vehicle. Moreover, the receiver R may, for instance, be part of a user vehicle. The receiver R may, for instance, be provided with means for stable installation of the receiver in a user vehicle.

Thus, Fig. 1 shows schematically a traveling (arrow y) user vehicle carrying such a receiver R. In the example, the emergency service vehicle is coming up from behind with respect to the user vehicle, but the system also works, for instance, in case of an oncoming emergency service vehicle. The user receiver R can timely warn a respective driver (i.e., road user) that an emergency service vehicle is approaching, in order that the user can take measures.

The emergency service signals S comprise at least one signal periodically transmitted by the transmitter T (with a constant period, for instance of one or a few seconds). The user receiver R is arranged to detect, for instance, to recognize, the periodic signals, for the purpose of detection of the respective transmitter T. The periodically transmitted signal proper comprises a relatively short signal, of a length of less than 0.1 second. Preferably, the transmitter T transmits this periodic signal all the time, at least if the transmitter T is in an active mode and is not used to conduct an encoded conversation. In this way, the user receiver R can properly distinguish an emergency service signal S from noise and possible interference signals, detection of the emergency service then being even possible if the respective transmitter T is in the active mode.

Further, it is advantageous when the transmitter T is arranged to transmit signals via different communication channels, within a predetermined frequency band. This frequency band may, for instance, comprise the frequency range between 380 and 385 MHz, or another frequency band. In particular, the frequency band is above 200 MHz, and, for instance, below 1 GHz. A band width of the predetermined frequency band may, for instance, be larger than 1 MHz, and in particular may be at least 5 MHz.

The user receiver R is then preferably configured to receive signals from the whole predetermined frequency band, to allow all the channels mentioned to be received simultaneously. In other words: preferably, the user receiver R is arranged not to be tuned to a single channel of the different communication channels of the network.

According to a further elaboration, the system comprises one or more stationary emergency service transmitters, for instance, transmitters of the radio rooms N mentioned. It is then advantageous if the stationary emergency service transmitters N and mobile emergency service transmitters T utilize different communication bands. Further, it is here preferred if each user receiver R is configured not to search for signals possibly transmitted by the stationary emergency service transmitters N (for instance, by not specifically searching for signals that are transmitted in a respective communication band of, for instance, basic posts, radio rooms or headquarters).

Use of the system shown in Fig. 1 preferably comprises a method of delivering a warning that an emergency service is approaching. As the figure shows, the emergency service (mobile as such) transmits the emergency service signals S, over a communication channel within the predetermined frequency band, and, for instance, periodically, to stationary emergency service communication devices M.

A stationary emergency service communication device M can receive the signals S from a proximate emergency service transmitter T, to offer communication via the emergency service communication network. The signals S may, for instance, comprise periodically transmitted report signals, provided with digital information, to report the emergency service transmitter T periodically to the network, or to periodically keep in contact with the network.

The user receiver verifies whether an emergency service signal S is being transmitted, in particular by 'listening' in the predetermined frequency band to signals (preferably instantaneously at all frequencies within the frequency band). Preferably, the user receiver R processes all signals received by the receiver R, toi detect the periodic emergency service signals. In particular, the present receiver R is not capable of decoding encoded information possibly present in the emergency service signals S.

The user receiver R proceeds to deliver a warning signal if the receiver detects an emergency service signal. To this end, the receiver R may, for instance, be provided with, or coupled to, a suitable alert device 9, e.g., a loudspeaker, display, or the like.

As mentioned, the emergency service signals S may be transmitted via different channels within the predetermined frequency band. Accordingly, the user receiver R preferably receives signals from the whole predetermined frequency band, comprising all the channels mentioned, and processes the signals to detect emergency service signals.

The user receiver R may, for instance, be arranged to determine the strength and reception direction of a received emergency service signal S. Determining a direction of reception may, for instance, be carried out utilizing antennas suitable for that purpose, for instance a number of directionally sensitive antennas and the like. The warning signal delivered by, or under the influence of, the receiver R can then provide information concerning the strength and the direction of the emergency service signal.

As mentioned, it is moreover advantageous if position information is available, for instance, information provided by a GPS system. The user receiver R may, for instance, be arranged to generate such position information, for instance, when the receiver R is provided with a GPS receiver. In that case, the user receiver R can, for instance, associate the location where an emergency service has been detected with the position information, and preferably store it, for instance, in a central (e.g., stationary) database. The database may, for instance, be the database described in NL1026352.

Fig. 2 shows schematically an example of a user receiver R. The receiver R has a relatively simple and inexpensive design, and is capable of detecting the signals mentioned surprisingly reliably.

The receiver is provided with an antenna 1 to receive radio-frequency signals. The antenna 1 may in itself be designed in different manners, and in particular is arranged to receive signals within a large bandwidth.

The present user receiver R is provided with a first band pass filter 2, coupled to the antenna 1 to receive the signals therefrom, and arranged to pass only signals that are within a defined frequency band. In this way, a first demarcation can be achieved, in order to search more specifically for signals S transmitted by a transmitter T. The first filter 2 can, for instance, prevent overload of the receiver and, for instance, prevent other parts of the receiver R being disturbed by, for instance, signals outside a band to be received.

Preferably, the receiver R is provided with a signal amplifier 3 to amplify received signals. In the example, such a signal amplifier 3 is connected to an output of the first filter 2, to amplify at least the frequency band passed by the filter 2.

A particularly advantageous embodiment comprises use of a mixer 4 and an oscillator 5 (e.g., a crystal-driven oscillator), which are arranged to remix signals received by the receiver R to an intermediate frequency. As shown in Fig. 2, the mixer 4 is set up to process the signals passed by the first band pass filter 2 (and amplified by amplifier 3). In this way, relatively simply, a good filter can be made to be selective for the signals that are to be received. An intermediate frequency is, for instance, below the predetermined frequency band.

Emergency service signals can be detected particularly well from the signal provided by the mixer 4. To this end, it is advantageous to provide a second band pass filter 6, to filter the signals processed by the mixer anew.

The second filter 6 can ensure that only those signals are passed that actually need to be received. The second filter 6 can accomplish the desired selectivity of the receiver. Preferably, the second filter 6 is relatively broadband, and relatively steep in the flanks. Good results are obtained if the second filter 6 is at least a 5^{th} order filter (preferably, e.g., a 7^{th} order filter), with a band pass width of, for instance, 5 MHz (or other width). This is especially advantageous if the emergency service transmitters T utilize different channels within a defined frequency band.

Preferably, a second signal amplifier IF is provided to amplify the signals provided by the second filter 6, and to deliver an RSSI ('Received Signal Strength Indication') signal. A buffer and filter V is provided, to filter the RSSI signal (*inter alia* to prevent aliasing) and to buffer it (to make a correct adaptation for the analog-digital converter 7).

Further, the receiver R comprises an analog-digital converter 7, arranged to digitize the analog signals filtered and processed by the means 2-6, IF, V, for the purpose of digital data processing by a digital signal processor 8. The converter 7 may, for instance, be part of the processor 8, or be a separate component. The converter 7 may further in itself be provided, for instance, with anti-aliasing means, to prevent aliasing in a signal sampling to be carried out by that converter.

The signal processor 8 is arranged to distinguish particular emergency service signals from interference signals, and may be implemented in different manners. The signal processor 8 may, for instance, comprise suitable signal processor microelectronics, a microcontroller, or the like. The processor 8 may be arranged to recognize a period (of transmitted emergency service signals) in the digitized signal, and to produce a warning signal as soon as the processor recognizes such a period. Further, the processor 8 may, for instance, be designed to adjust the warning signal to a strength and direction of a received, recognized emergency service signal.

In the example, the receiver R itself comprises an alert device 9, designed to provide a user with information that the receiver R has discerned an emergency service signal. Alternatively, the alert device may be a separate component, which is, for instance, drivable by the receiver R, or connectable to the receiver, for instance, via a suitable interface.

Preferably, a second signal amplifier IF is provided (not shown) to amplify the signals provided by the second filter 6, and to produce an RSSI ('Received Signal Strength Indication') signal. The RSSI signal, after filtering (*inter alia* to prevent aliasing) and buffering (making appropriate adjustment for the A/D converter), can be presented to the A/D converter 7 to allow subsequent digital processing thereof.

The system described hereinabove is particularly well suited for use by road users. Thus, the user receiver R can timely inform a road user of an approaching emergency service, independently of whether or not warning signals (siren, flashing light) are being used by the emergency service. The receiver R may, for instance, receive emergency service radio signals S, and warn the road user automatically with suitable acoustic and visual signals if emergency service radio signals S have been recognized by the receiver (e.g., recognition based on a constant period in such signals S). This has a safety enhancing effect in particular if, for instance, an accident has taken place, in bad weather conditions (fog, snow, or heavy rainfall). The user receiver R can prevent false messages particularly well, which may be achieved in particular by the use of suitable filter means 2-6 in combination with a digital signal processor, and more in particular with the second signal amplifier IF mentioned.

By making use of an optional GPS receiver, the system can be expanded in a simple manner, to store emergency service locations (automatically) in a central, external database. In this manner, emergency service locations may be shared with other drivers, to provide extra safety.

It will be self-evident that the invention is not limited to the exemplary embodiment described. Various modifications are possible within the scope of the invention as set forth in the appended claims.

Thus, the term "a" in this application can mean, for instance, just one, at least one, or a plurality.

Furthermore, a communication between the stationary emergency service communication device and the emergency service transmitter can, for instance, comprise at least transmission of radio signals from the transmitter to the receiver.

According to a further elaboration, the mobile transmitter is part of a mobile emergency service communication unit (e.g., a walkie-talkie), arranged to provide two-way communication via the emergency service communication network.

A warning signal to be produced by (or under the influence of) the user receiver may, for instance, comprise an acoustic signal, a visual signal, or both, or any other suitable warning signal.

Further, it is advantageous if an emergency service transmitter T is configured to transmit respective (e.g., periodic) signals continuously (or, e.g., intermittently), in particular as long as the transmitter T is switched on, for instance, to report to the network periodically.

The user receiver R is arranged, for instance, to search automatically and continuously for emergency service signals transmitted by mobile transmitters T, within a predetermined (relatively broad) frequency band.

## Claims

1. An emergency service warning system, arranged to warn a user of the approach of emergency services, provided with:
- at least one movable emergency service transmitter (T); and
- at least one receiver (R), arranged to receive signals transmitted by the emergency service transmitter (T),
- at least one stationary emergency service communication device (M) adapted to communicate with said emergency service transmitter (T), **characterized in that**
- the stationary emergency service transmitter (M) and movable emergency service transmitters (T) utilize different communication bands;
- whereby the communication between the stationary emergency service communication device and the movable emergency service transmitters (T) utilizes encoded digital emergency service signals and the emergency service signals (S) comprise at least one signal transmitted periodically by the transmitter (T), which periodic signal is transmitted when the transmitter (T) is in an active mode to report the presence of the transmitter (T) to the network (T, M), wherein the periodically transmitted signal comprises a relatively short signal, of a length of less than 0.1 second, wherein the transmitter (T) transmits the periodic signal at least if the transmitter (T) is in the active mode and is not used to conduct an encoded conversation; and
- the user receiver (R) is arranged to detect said periodic signals for the purpose of detection of the movable transmitter (T) and to deliver a warning signal upon detection of said emergency service signal (S) without deciphering a possible content of the emergency service signals.

2. A system according to claim 1, provided with multiple emergency service transmitters (T) and stationary emergency service communication devices (M), which are part of a national or regional emergency service communication network, the emergency service communication devices (M) comprising in particular stationary network stations.

3. A system according to any one of the preceding claims, wherein each user receiver (R):
- is designed to be portable by a user.

4. A system according to any of the claims 1-2, wherein each user receiver (R):
- is part of a user vehicle.

5. A system according to any one of the preceding claims, wherein said transmitter (T) is arranged to transmit signals via different communication channels, within a predetermined frequency band, wherein the user receiver (R) is configured to receive signals from the whole predetermined frequency band.

6. A system according to any one of the preceding claims, wherein said user receiver (R) is provided with a mixer (4) and an oscillator (5), which are arranged to remix signals received by the receiver (R) to an intermediate frequency.

7. A system according to claims 5 and 6, wherein said user receiver (R) is provided with a first band pass filter (2), arranged to pass only signals within said predetermined frequency band, wherein the mixer (4) is set up to process the signals passed by the first band pass filter (2)

8. A system according to claim 7, wherein said user receiver (R) is provided with a second band pass filter (6) to filter the signal processed by the mixer anew.

9. A system according to claim 7 or 8, wherein the user receiver (R) is provided with a second signal amplifier (IF) to amplify the signals provided by the second band pass filter (6), and to deliver an RSSI ('Received Signal Strength Indication') signal.

10. A method of delivering a warning in case of an approaching mobile emergency service, wherein the emergency service transmits emergency service signals, wherein a number of stationary emergency service communication devices are set up to receive emergency service signals, **characterized in that**
- the stationary emergency service transmitter and mobile emergency service transmitters utilize different communication bands;
- the communication between the stationary emergency service and the emergency service transmitters utilizes encoded digital emergency service signals and the emergency service signals comprise at least one signal transmitted periodically by the transmitter (T); and
- the user receiver (R) detects said periodic signals for the purpose of detection of the respective transmitter (T) and delivers a warning signal upon detection of said emergency service signal (S) without deciphering a possible content of the emergency service signals.

11. A method according to claim 10, wherein the emergency service signals are transmitted via different channels within a predetermined frequency band, wherein the user receiver (R) receives signals from the whole predetermined frequency band, comprising all said channels, and processes the signals to detect emergency service signals.

12. A method according to claim 11, wherein a bandwidth of the predetermined frequency band is greater than 1 MHz, and in particular is at least 5 MHz.

13. A method according to any one of claims 10-12, wherein the delivered warning signal provides information concerning the strength and/or direction of a detected emergency service signal.

14. A method according to any one of claims 10-13, comprising associating a location where an emergency service has been detected with position information, for instance position information provided by a GPS system, and preferably storing the position information.

15. A user receiver (R) of a system according to any one of claims 1-9, the receiver being configured to detect the encoded digital emergency service signals (S) and to deliver a warning signal upon detection of an emergency service signal (S) without deciphering a possible content of the emergency service signals.

## Patentansprüche

1. Einsatzdienst-Warnsystem, das dazu eingerichtet ist, einen Benutzer vor der Annäherung von Einsatzdiensten zu warnen, versehen mit:
- mindestens einem beweglichen Einsatzdienstsender (T); und
- mindestens einem Empfänger (R), der dazu eingerichtet ist, von dem Einsatzdienstsender (T) übertragene Signale zu empfangen,
- mindestens einer stationären Einsatzdienst-Kommunikationseinrichtung (M), die dazu ausgebildet ist, mit dem genannten Einsatzdienstsender (T) zu kommunizieren,
**dadurch gekennzeichnet, dass**
- der stationäre Einsatzdienstsender (M) und die beweglichen Einsatzdienstsender (T) unterschiedliche Kommunikationsbänder nutzen;
- wodurch die Kommunikation zwischen der stationären Einsatzdienst-Kommunikationseinrichtung und den beweglichen Einsatzdienstsendern (T) codierte digitale Einsatzdienstsignale nutzt und die Einsatzdienstsignale (S) mindestens ein periodisch von dem Sender (T) übertragenes Signal umfassen, wobei dieses periodische Signal übertragen wird, wenn sich der Sender (T) in einem aktiven Modus befindet, um dem Netzwerk (T, M) die Anwesenheit des Senders (T) zu melden, wobei das periodisch übertragene Signal ein relativ kurzes Signal mit einer Länge von weniger als 0,1 Sekunden umfasst, wobei der Sender (T) das periodische Signal zumindest dann überträgt, wenn sich der Sender (T) im aktiven Modus befindet und nicht dazu verwendet wird, ein codiertes Gespräch zu führen; und
- der Benutzerempfänger (R) dazu eingerichtet ist, die genannten periodischen Signale zum Zweck der Erfassung des beweglichen Senders (T) zu erfassen und bei Erfassung des genannten Einsatzdienstsignals (S) ein Warnsignal zu liefern, ohne einen möglichen Inhalt der Einsatzdienstsignale zu entschlüsseln.

2. System nach Anspruch 1, versehen mit mehreren Einsatzdienstsendern (T) und stationären Einsatzdienst-Kommunikationseinrichtungen (M), die Teil eines nationalen oder regionalen Einsatzdienst-Kommunikationsnetzwerks sind, wobei die Einsatzdienst-Kommunikationseinrichtungen (M) insbesondere stationäre Netzwerkstationen umfassen.

3. System nach einem der vorstehenden Ansprüche, wobei jeder Benutzerempfänger (R):
- dazu ausgelegt ist, von einem Benutzer tragbar zu sein.

4. System nach einem der Ansprüche 1-2, wobei jeder Benutzerempfänger (R):
- Teil eines Benutzerfahrzeugs ist.

5. System nach einem der vorstehenden Ansprüche, wobei der genannte Sender (T) dazu eingerichtet ist, Signale über unterschiedliche Kommunikationskanäle innerhalb eines vorbestimmten Frequenzbands zu übertragen, wobei der Benutzerempfänger (R) dazu konfiguriert ist, Signale aus dem gesamten vorbestimmten Frequenzband zu empfangen.

6. System nach einem der vorstehenden Ansprüche, wobei der genannte Benutzerempfänger (R) mit einem Mischer (4) und einem Oszillator (5) versehen ist, die dazu eingerichtet sind, von dem Empfänger (R) empfangene Signale auf eine Zwischenfrequenz umzumischen.

7. System nach den Ansprüchen 5 und 6, wobei der genannte Benutzerempfänger (R) mit einem ersten Bandpassfilter (2) versehen ist, das dazu eingerichtet ist, nur Signale innerhalb des genannten vorbestimmten Frequenzbands durchzulassen, wobei der Mischer (4) dazu eingerichtet ist, die von dem ersten Bandpassfilter (2) durchgelassenen Signale zu verarbeiten

8. System nach Anspruch 7, wobei der genannte Benutzerempfänger (R) mit einem zweiten Bandpassfilter (6) versehen ist, um das von dem Mischer verarbeitete Signal erneut zu filtern.

9. System nach Anspruch 7 oder 8, wobei der Benutzerempfänger (R) mit einem zweiten Signalverstärker (IF) versehen ist, um die von dem zweiten Bandpassfilter (6) bereitgestellten Signale zu verstärken und ein RSSI ('Received Signal Strength Indication')-Signal zu liefern.

10. Verfahren zum Liefern einer Warnung im Falle eines sich annähernden mobilen Einsatzdienstes, wobei der Einsatzdienst Einsatzdienstsignale überträgt, wobei eine Anzahl von stationären Einsatzdienst-Kommunikationseinrichtungen dazu eingerichtet ist, Einsatzdienstsignale zu empfangen, **dadurch gekennzeichnet, dass**
- der stationäre Einsatzdienstsender und die mobilen Einsatzdienstsender unterschiedliche Kommunikationsbänder nutzen;
- die Kommunikation zwischen dem stationären Einsatzdienst und den Einsatzdienstsendern codierte digitale Einsatzdienstsignale nutzt und die Einsatzdienstsignale mindestens ein periodisch von dem Sender (T) übertragenes Signal umfassen; und
- der Benutzerempfänger (R) die genannten periodischen Signale zum Zweck der Erfassung des jeweiligen Senders (T) erfasst und bei Erfassung des genannten Einsatzdienstsignals (S) ein Warnsignal liefert, ohne einen möglichen Inhalt der Einsatzdienstsignale zu entschlüsseln.

11. Verfahren nach Anspruch 10, wobei die Einsatzdienstsignale über unterschiedliche Kanäle innerhalb eines vorbestimmten Frequenzbands übertragen werden, wobei der Benutzerempfänger (R) Signale aus dem gesamten vorbestimmten Frequenzband, das alle genannten Kanäle umfasst, empfängt und die Signale verarbeitet, um Einsatzdienstsignale zu erfassen.

12. Verfahren nach Anspruch 11, wobei eine Bandbreite des vorbestimmten Frequenzbands größer als 1 MHz ist und insbesondere mindestens 5 MHz beträgt.

13. Verfahren nach einem der Ansprüche 10-12, wobei das gelieferte Warnsignal Informationen bezüglich der Stärke und/oder Richtung eines erfassten Einsatzdienstsignals bereitstellt.

14. Verfahren nach einem der Ansprüche 10-13, umfassend das Zuordnen eines Ortes, an dem ein Einsatzdienst erfasst wurde, zu Positionsinformationen, beispielsweise Positionsinformationen, die von einem GPS-System bereitgestellt werden, und vorzugsweise das Speichern der Positionsinformationen.

15. Benutzerempfänger (R) eines Systems nach einem der Ansprüche 1-9, wobei der Empfänger dazu konfiguriert ist, die codierten digitalen Einsatzdienstsignale (S) zu erfassen und bei Erfassung eines Einsatzdienstsignals (S) ein Warnsignal zu liefern, ohne einen möglichen Inhalt der Einsatzdienstsignale zu entschlüsseln.

## Revendications

1. Système d'avertissement de service d'urgence, agencé pour avertir un utilisateur de l'approche de services d'urgence, pourvu de :
- au moins un émetteur de service d'urgence mobile (T) ; et
- au moins un récepteur (R), agencé pour recevoir des signaux émis par l'émetteur de service d'urgence (T),
- au moins un dispositif de communication de service d'urgence fixe (M) adapté pour communiquer avec ledit émetteur de service d'urgence (T),
**caractérisé en ce que**
- l'émetteur de service d'urgence fixe (M) et les émetteurs de service d'urgence mobiles (T) utilisent des bandes de communication différentes ;
- moyennant quoi la communication entre le dispositif de communication de service d'urgence fixe et les émetteurs de service d'urgence mobiles (T) utilise des signaux de service d'urgence numériques codés et les signaux de service d'urgence (S) comprennent au moins un signal émis périodiquement par l'émetteur (T), lequel signal périodique est émis lorsque l'émetteur (T) est en mode actif afin de signaler la présence de l'émetteur (T) au réseau (T, M), le signal émis périodiquement comprenant un signal relativement court, d'une durée inférieure à 0,1 seconde, l'émetteur (T) émettant le signal périodique au moins si l'émetteur (T) est en mode actif et s'il n'est pas utilisé pour effectuer une conversation codée ; et
- le récepteur utilisateur (R) est agencé pour détecter lesdits signaux périodiques dans le but de détecter l'émetteur mobile (T), et pour délivrer un signal d'avertissement lors de la détection dudit signal de service d'urgence (S) sans déchiffrer un éventuel contenu des signaux de service d'urgence.

2. Système selon la revendication 1, comprenant plusieurs émetteurs de service d'urgence (T) et dispositifs de communication de service d'urgence fixes (M), qui font partie d'un réseau de communication de service d'urgence national ou régional, les dispositifs de communication de service d'urgence (M) comprenant en particulier des stations de réseau fixes.

3. Système selon l'une quelconque des revendications précédentes, dans lequel chaque récepteur utilisateur (R) :
- est conçu pour pouvoir être porté par un utilisateur.

4. Système selon l'une quelconque des revendications 1 à 2, dans lequel chaque récepteur utilisateur (R) :
- fait partie d'un véhicule utilisateur.

5. Système selon l'une quelconque des revendications précédentes, dans lequel ledit émetteur (T) est agencé pour émettre des signaux via différents canaux de communication, dans une bande de fréquence prédéterminée, dans lequel le récepteur utilisateur (R) est configuré pour recevoir des signaux provenant de l'ensemble de la bande de fréquence prédéterminée.

6. Système selon l'une quelconque des revendications précédentes, dans lequel ledit récepteur utilisateur (R) est pourvu d'un mélangeur (4) et d'un oscillateur (5), qui sont agencés pour remélanger les signaux reçus par le récepteur (R) à une fréquence intermédiaire.

7. Système selon les revendications 5 et 6, dans lequel ledit récepteur utilisateur (R) est pourvu d'un premier filtre passe-bande (2), agencé pour ne laisser passer que les signaux situés dans ladite bande de fréquence prédéterminée, dans lequel le mélangeur (4) est configuré pour traiter les signaux transmis par le premier filtre passe-bande (2).

8. Système selon la revendication 7, dans lequel ledit récepteur utilisateur (R) est pourvu d'un deuxième filtre passe-bande (6) pour filtrer à nouveau le signal traité par le mélangeur.

9. Système selon la revendication 7 ou 8, dans lequel le récepteur utilisateur (R) est pourvu d'un deuxième amplificateur de signal (IF) pour amplifier les signaux fournis par le deuxième filtre passe-bande (6), et pour délivrer un signal d'indication d'intensité de signal reçu (RSSI).

10. Procédé de délivrance d'un avertissement en cas d'approche d'un service d'urgence mobile, dans lequel le service d'urgence émet des signaux de service d'urgence, dans lequel un nombre de dispositifs de communication de service d'urgence fixes sont configurés pour recevoir des signaux de service d'urgence, **caractérisé en ce que**
- l'émetteur de service d'urgence fixe et les émetteurs de service d'urgence mobiles utilisent des bandes de communication différentes ;
- la communication entre le service d'urgence fixe et les émetteurs de service d'urgence utilise des signaux de service d'urgence numériques codés et les signaux de service d'urgence comprennent au moins un signal émis périodiquement par l'émetteur (T) ; et
- le récepteur utilisateur (R) détecte lesdits signaux périodiques dans le but de détecter l'émetteur respectif (T), et délivre un signal d'avertissement lors de la détection dudit signal de service d'urgence (S) sans déchiffrer un éventuel contenu des signaux de service d'urgence.

11. Procédé selon la revendication 10, dans lequel les signaux de service d'urgence sont émis, via différents canaux, dans une bande de fréquence prédéterminée, dans lequel le récepteur utilisateur (R) reçoit des signaux provenant de l'ensemble de la bande de fréquence prédéterminée, comprenant tous lesdits canaux, et traite les signaux pour détecter des signaux de service d'urgence.

12. Procédé selon la revendication 11, dans lequel une largeur de bande de la bande de fréquence prédéterminée est supérieure à 1 MHz, et en particulier est d'au moins 5 MHz.

13. Procédé selon l'une quelconque des revendications 10 à 12, dans lequel le signal d'avertissement délivré fournit des informations concernant l'intensité et/ou la direction d'un signal de service d'urgence détecté.

14. Procédé selon l'une quelconque des revendications 10 à 13, comprenant l'association d'un lieu où un service d'urgence a été détecté à des informations de position, par exemple des informations de position fournies par un système GPS, et de préférence le stockage des informations de position.

15. Récepteur utilisateur (R) d'un système selon l'une quelconque des revendications 1 à 9, le récepteur étant configuré pour détecter les signaux de service d'urgence numériques codés (S) et pour délivrer un signal d'avertissement lors de la détection d'un signal de service d'urgence (S) sans déchiffrer un éventuel contenu des signaux de service d'urgence.
